Europäisches Patentamt

European Patent Office

Office européen des brevets

(11) Publication number: **0 203 202**
**A1**

# EUROPEAN PATENT APPLICATION

published in accordance with Art. 158(3) EPC

(21) Application number: **85905893.5**

(22) Date of filing: **26.11.85**

Data of the international application taken as a basis:

(86) International application number: **PCT/JP 85/00653**

(87) International publication number: **WO 86/03158 (05.06.86 86/12)**

(51) Int. Cl.⁴: **B 25 J 19/00**

(30) Priority: **26.11.84 JP 247925/84**

(43) Date of publication of application: **03.12.86 Bulletin 86/49**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **NAKASHIMA, Seiichiro, 5-3-2, Hino-honcho Hino-shi, Tokyo 191 (JP)**
Inventor: **TOYODA, Kenichi, 1-17-25, Shinmei Hino-shi, Tokyo 191 (JP)**
Inventor: **TORII, Nobutoshi Fuyo Haitsu 308, 65-4, Takakura-cho Hachioji-shi, Tokyo 192 (JP)**

(74) Representative: **Allman, Peter John et al, Marks and Clerk Suite 301 Sunlight House Quay Street, Manchester M3 3JY (GB)**

(54) **INDUSTRIAL ROBOT HAVING EXPLOSION-PREVENTING STRUCTURE.**

(57) An industrial robot of an explosion preventing type in which air-tight chambers (30, 31–33) are formed in a robot body (10), robot-moving portions (12, 13, 14) are contained in the air-tight chambers, a compressed gas is supplied from outside the robot body (10) to maintain the internal pressure, the compressed gas is taken out from a rear portion (33a) of the air-tight chambers (30, 31–33) and is exhausted out of the robot body (10) to generate a circulating stream of gas in the air-tight chambers (30, 31–33), and a ventilation tube (70) is provided to exhaust inflammable gas that enters from the external side together with the circulating stream of gas when the robot is at rest.

## DESCRIPTION

TECHNICAL FIELD

The present invention relates to an explosion-proof industrial robot for use in an inflammable or explosive atmosphere, as in a painting shop and, more specifically, to an improved explosion-proof construction having an enhanced explosion-proof function.

BACKGROUND ART

An explosion-proof industrial robot capable of maintaining the internal pressure thereof at a level above the ambient pressure has been proposed, for example, in PCT/JP58/00365, for use in an inflammable or explosive atmosphere as, for example, a painting robot. In this known explosion-proof industrial robot, driving devices, namely, electric motors, for driving the moving units of the robot, such as the swiveling body unit of the robot body, the robot arm unit comprising a forearm and an upper arm, and the wrist unit attached to the free end of the robot arm unit, are disposed within an airtight chamber formed inside the robot body, and the internal pressure of the airtight chamber is maintained at a level above the ambient pressure prevailing in the robot body to keep external inflammable gases from flowing into the airtight chamber so that ignition and explosion attributable to the electric motors will not occur. That is, the explosion-proof function is thus maintained.

Nevertheless, even the above-mentioned explosion-proof industrial robot must have exhaust means for exhausting inflammable gases in the airtight chamber, since the internal pressure of the airtight chamber drops gradually to the level of the external ambient pressure while the robot operation is interrupted, for example, during the night, and therefore the inflammable

- 2 -

gases contained in the ambient air are allowed to leak into the airtight chamber. This known explosion-proof industrial robot has a problem in that exhausting means capable of ensuring permanent explosion-proof function by exhausting the inflammable gases particularly from the depths of the airtight chamber must be provided.

DISCLOSURE OF THE INVENTION

It is an object of the present invention to provide an improved construction capable of solving the above-mentioned problems.

In view of the object of the invention, the present invention provides ventilating pipe means for producing a circulating gas current through the airtight chamber by supplying a pressurized gas for maintaining the internal pressure of the airtight chamber into the airtight chamber from the depths of the same and exhausting the pressurized gas outside the robot body so that the inflammable gases having entered the airtight chamber during the interruption of operation of the industrial robot will be carried outside the airtight chamber by the circulating gas current. The ventilating pipe means has one end opening into the airtight chamber and the other end opening through a check valve into the exterior of the robot body. The circulating gas current serves also to cool the electric motors accommodated in the airtight chamber.

BRIEF DESCRIPTION OF THE DRAWINGS

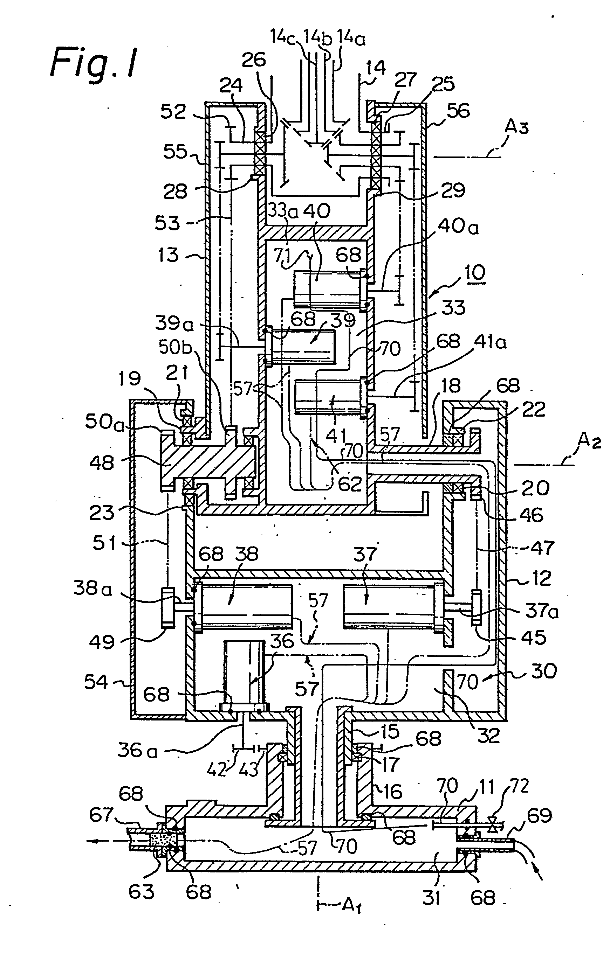

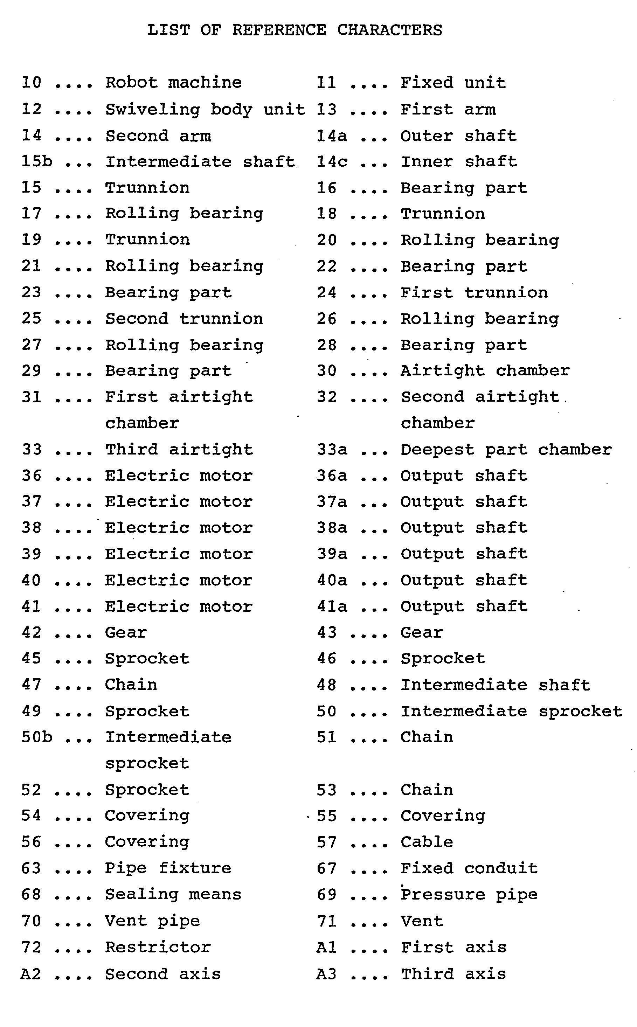

Figure 1 is a longitudinal sectional view of an explosion-proof industrial robot embodying the present invention in the form of a six-axis articulated industrial robot having an improved explosion-proof construction.

BEST MODE FOR CARRYING OUT THE INVENTION

An industrial robot shown in the drawing has a robot machine 10 and a separate robot controller, not shown, for controlling the operation of the moving units, which will be described later, of the robot machine 10. The robot machine 10 comprises a fixed unit 11 fixed to the surface of a support, as the surface of the floor, and moving units mounted on the fixed unit 11. The moving units are a swiveling body unit 12 joined to the fixed unit 11 for rotation about a first axis A1 perpendicular to the surface of the support, a first arm 13 joined to the swiveling body unit 12 for turning motion about a second axis A2 perpendicular to the first axis A1, a second arm 14 joined to the first arm 13 for turning motion about a third axis A3 parallel to the second axis A2, and a robot wrist unit, not shown, attached to the free end of the second arm 14 for rotation about three axes relative to the second arm 14. A working tool such as a spray gun is attached to the robot wrist unit.

The swiveling body unit 12 has a trunnion 15 coaxial with the first axis A1 at the bottom thereof. The trunnion 15 is supported for rotation on a bearing part 16 of the fixed unit 11 by means of a bearing 17. The first arm 13 has first and second trunnions 18 and 19 extending coaxially with the second axis A2. The trunnions 18 and 19 are supported rotatably on a bearing part 22 of the swiveling body unit 12 by means of rolling bearings 20 and 21, respectively. The second arm 14 has first and second trunnions 24 and 25 extending coaxially with the third axis A3. The trunnions 24 and 25 are supported rotatably on bearing parts 28 and 29 of the first arm 13 by means of rolling bearings 26 and 27, respectively. An outer shaft 14a, an intermediate shaft 14b, and an inner shaft 14c for transmitting three rotary motions to the robot wrist unit are extended coaxially and rotatably through the second arm 14.

An airtight chamber 30 is formed within the robot machine 10. The airtight chamber 30 comprises a first airtight chamber 31 formed in the fixed unit 11, a second airtight chamber 32 formed in the swiveling body unit 12, and a third airtight chamber 33 formed in the first arm 13. As illustrated in the drawing, these three airtight chambers form a hollow construction communicating from the first airtight chamber 31 to the depths of the third airtight chamber 33.

The six-axis industrial robot is provided with six electric motors 36 to 41 for driving the moving units, respectively. These electric motors are servomotors to be controlled by the robot controller. Since the industrial robot is operated in an inflammable atmosphere, AC servomotors in which the possibility of producing sparks is eliminated are preferable to DC servomotors having commutators as the electric motor for driving the moving units. The electric motors 36 to 41 have output shafts 36a to 41a, respectively.

The electric motor 36 for rotatively driving the swiveling body unit 12 is disposed within the second airtight chamber 32 of the swiveling body unit 12 with the output shaft 36a projecting outside from the external wall of the swiveling body unit 12. A gear 42 secured to the output shaft 36a engages a gear 43 secured to the fixed unit 11 and revolves around the gear 43.

The electric motor 37 for rotatively driving the first arm 13 is disposed within the second airtight chamber 32 of the swiveling body unit 12. A sprocket 45 secured to the output shaft 37a of the electric motor 37 is connected to a sprocket 46 secured to the first trunnion 18 of the first arm 13 by means of a chain 47. Accordingly, the rotative driving force of the electric motor 37 is transmitted through the first trunnion 18 to the first arm 13.

The electric motor 38 for rotatively driving the second arm 14 is disposed within the second airtight chamber 32 of the swiveling body unit 12 with the output shaft 38a thereof projecting outside from the external wall of the swiveling body unit 12. An intermediate shaft 48 is supported rotatably and coaxially in the second trunnion 19 of the first arm 13. A sprocket 49 secured to the output shaft 38a of the electric motor 38 is connected to an intermediate sprocket 50a secured to the intermediate shaft 48 by means of a chain 51. Another intermediate sprocket 50b secured to the intermediate shaft 48 is connected to a sprocket 52 secured to the first trunnion 24 by means of a chain 53. Accordingly, the rotative driving force of the electric motor 38 is transmitted through the bearing part 28 to the second arm 14.

The three electric motors 39 to 41 for driving the robot wrist unit are disposed within the third airtight chamber 33 of the first arm 13 with the respective output shafts 39a to 41a thereof projecting outside from the wall of the third airtight chamber 33 and protected by coverings 55 and 56. The torques of the electric motors 39 to 41 are transmitted through sprocket and chain mechanisms and bevel gear mechanisms to the outer shaft 14a, the intermediate shaft 14b, and the inner shaft 14c, respectively, as illustrated in Fig. 1 to drive the robot wrist unit, not shown, for rotary motion about three axes. The output shaft 39a of the electric motor 38 is protected by a covering 54. Cables 57 for supplying control power to the electric motors 36 to 41 are extended within the airtight chamber 30. The outer ends of the cables 57 are extended via a pipe fixture 63 fixed to the external wall of the fixed unit 11 and further via a fixed conduit 67 to the separate robot controller. Sealing means 68 including appropriate sealing members are provided at positions to be sealed for airtightly sealing the airtight chambers 30 of the robot machine 10 from the ambient atmosphere of the robot machine 10. A pressure pipe 69 for supplying a gas, as air or an inert gas, having a pressure higher than the pressure of the ambient atmosphere of the robot machine 10 by several millimeters of water into the airtight chamber 30 to maintain the internal pressure of the airtight chamber 30 at a level above the pressure of the external inflammable or explosive atmosphere is connected to the airtight chamber 30. A pressurized gas is supplied through the pressure pipe 69 into the airtight chamber 30 at least while the robot is operating. Although not shown in the drawing, it is preferable to provide a pressure detecting switch for detecting pressure drop in the airtight chamber 30 to monitor the pressure condition of the interior of the airtight chamber 30.

Maintaining the internal pressure of the airtight chamber 30 above the external ambient pressure by supplying a pressurized gas through the pressure pipe 69 into the airtight chamber 30 prevents the entrance of inflammable or explosive matters, for example, atomized paint, contained in the external ambient atmosphere into the airtight chamber 30. However, when the robot machine is left at rest during the right or for a long time after interrupting operation and the supply of the pressurized gas, the internal pressure of the airtight chamber drops gradually to the level of the external ambient pressure. Consequently, the inflammable or explosive matters leak little by little through small leaks into the airtight chamber 30. Accordingly, a vent pipe 70 is extended from one end of the fixed unit 11 through the first, second and third airtight chambers 31, 32 and 33 of the airtight chamber 30 to the deepest part 33a of the third airtight chamber 33 as means for discharging the inflammable or explosive matters entering the airtight chamber 30 from the exterior of the robot. A vent 71 of the vent pipe 70 is opened into the deepest part 33a of the third airtight chamber 33. A restrictor 72 is provided in the vent pipe 70 at the inlet end near the fixed unit 11. The vent pipe 70 communicates with the outside by means of the restrictor 72. When the pressurized gas is supplied into the airtight chamber 30, the pressurized gas supplied into the airtight chamber 30 flows through the vent 71 opening in the deepest part 33a of the third airtight chamber 33 into the vent pipe 70 toward the outlet end in the fixed unit 11 and is discharged outside under the restriction of the restrictor 72. Accordingly, after the supply of the pressurized gas has been started, a current of the pressurized gas is produced through the first, second, and third airtight chambers 31, 32, and 33 and through the vent pipe 70 while the pressurized gas is supplied continuously. Thus, the inflammable or explosive matters entered the airtight chamber 30 are discharged outside together with the current of the pressurized gas through the vent pipe 70 when the current of the pressurized gas is produced continuously. That is, the inflammable or explosive matters can be expelled from the interior of the airtight chamber 30 before restarting the operation of the industrial robot by continuously supplying the pressurized gas for a fixed period of time before restarting the operation of the industrial robot even when the operation of the industrial robot and the supply of the pressurized gas are interrupted for a long time, for example, during the night, and therefore, the deterioration of the explosion-proof function is avoided. Moreover, when the pressurized gas is supplied continuously or intermittently during the operation of the industrial robot to produce the current of the pressurized gas, the heat generated by the electric motors 36 to 41 accommodated in the airtight chamber 30 is carried outside by the current of the pressurized gas, and hence, eventually, the current of the pressurized gas cools the electric motors 36 to 41. The vent pipe 70 may be formed by a flexible pipe, such as a synthetic resin pipe or a flexible metallic pipe, and may be extended along the axes of rotation of the moving units of the industrial robot so as to open into the deepest part 33a of the third airtight chamber 33. Although the present invention has been described as applied to a six-axis articulated industrial robot in the form of an internally pressurized explosion-proof robot, naturally, the present invention is applicable to various internally pressurized industrial robot.

As is apparent from the foregoing description, an explosion-proof industrial robot according to the present invention is provided with ventilating means for ventilating an airtight chamber formed in a robot machine to accommodate the electric motors so that a current of a gas produced as a pressurized gas for maintaining the internal pressure of the airtight chamber is supplied into the airtight chamber. Thus, the interior of the airtight chamber is always isolated from inflammable or explosive gases even when the industrial robot is operated in an inflammable or explosive atmosphere and the internal pressure of the airtight chamber is maintained at a level above the ambient pressure, and therefore, the explosion-proof performance is always ensured and, at the same time, the electric motors are cooled, so that the safety performance of the industrial robot is improved.

## CLAIMS

1. An explosion-proof industrial robot comprising: a robot machine having moving robot units; a plurality of electric motors for driving the moving robot units, disposed in an airtight chamber formed within the robot machine; and pressurizing means for supplying a pressurized gas into the airtight chamber to maintain the internal pressure of the airtight chamber at a level above the pressure prevailing in the ambience of the robot machine, characterized in that a discharge passage for discharging the pressurized gas from the airtight chamber outside the robot machine is formed by providing vent pipe means having a vent pipe extended from the entrance to the depths of the airtight chamber and having one end opening into the deepest part of the airtight chamber and the other end communicating with the outside of the robot machine through a restrictor.

2. An explosion-proof industrial robot as recited in Claim 1, wherein the vent pipe of said vent pipe means is a flexible pipe.

**Fig.1**

0203202

# LIST OF REFERENCE CHARACTERS

10 .... Robot machine          11 .... Fixed unit
12 .... Swiveling body unit    13 .... First arm
14 .... Second arm             14a ... Outer shaft
15b ... Intermediate shaft     14c ... Inner shaft
15 .... Trunnion               16 .... Bearing part
17 .... Rolling bearing        18 .... Trunnion
19 .... Trunnion               20 .... Rolling bearing
21 .... Rolling bearing        22 .... Bearing part
23 .... Bearing part           24 .... First trunnion
25 .... Second trunnion        26 .... Rolling bearing
27 .... Rolling bearing        28 .... Bearing part
29 .... Bearing part           30 .... Airtight chamber
31 .... First airtight         32 .... Second airtight
        chamber                        chamber
33 .... Third airtight         33a ... Deepest part chamber
36 .... Electric motor         36a ... Output shaft
37 .... Electric motor         37a ... Output shaft
38 .... Electric motor         38a ... Output shaft
39 .... Electric motor         39a ... Output shaft
40 .... Electric motor         40a ... Output shaft
41 .... Electric motor         41a ... Output shaft
42 .... Gear                   43 .... Gear
45 .... Sprocket               46 .... Sprocket
47 .... Chain                  48 .... Intermediate shaft
49 .... Sprocket               50 .... Intermediate sprocket
50b ... Intermediate           51 .... Chain
        sprocket
52 .... Sprocket               53 .... Chain
54 .... Covering               55 .... Covering
56 .... Covering               57 .... Cable
63 .... Pipe fixture           67 .... Fixed conduit
68 .... Sealing means          69 .... Pressure pipe
70 .... Vent pipe              71 .... Vent
72 .... Restrictor             A1 .... First axis
A2 .... Second axis            A3 .... Third axis

# INTERNATIONAL SEARCH REPORT

0203202

International Application No. PCT/JP85/00653

**I. CLASSIFICATION OF SUBJECT MATTER** (if several classification symbols apply, indicate all) [3]

According to International Patent Classification (IPC) or to both National Classification and IPC

Int.Cl[4]   B25J 19/00

**II. FIELDS SEARCHED**

| | Minimum Documentation Searched [4] |
|---|---|
| Classification System | Classification Symbols |
| IPC | B25J 19/00, B65G 21/00 |

| Documentation Searched other than Minimum Documentation to the Extent that such Documents are Included in the Fields Searched [5] |
|---|
| Jitsuyo Shinan Koho                 1926 - 1985 |
| Kokai Jitsuyo Shinan Koho          1971 - 1985 |

**III. DOCUMENTS CONSIDERED TO BE RELEVANT [14]**

| Category* | Citation of Document, [16] with indication, where appropriate, of the relevant passages [17] | Relevant to Claim No. [18] |
|---|---|---|
| P | JP, A, 60-25695 (Hitachi, Ltd.), 8 February 1985 (08. 02. 85) (Family: none) | 1, 2 |
| A | JP, B2, 51-6950 (Clement Walker Weston Junior) 3 March 1976 (03. 03. 76), Column 1, lines 31 to 36 (Family: none) | 1 |
| A | JP, U, 53-490 (Kanto Jidosha Kogyo Kasubhiki Kaisha), 6 January 1978 (06. 01. 78) (Family: none) | 1 |
| A | JP, Y2, 53-35913 (Osame Kogyo Kabushiki Kaisha), 2 September 1978 (02. 09. 78) (Family: none) | 1, 2 |

\* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| February 17, 1986 (17. 02. 86) | February 24, 1986 (24. 02. 86) |
| International Searching Authority [1] | Signature of Authorized Officer [3] |
| Japanese Patent Office | |

Form PCT/ISA/210 (second sheet) (October 1981)